# EUROPÄISCHE PATENTSCHRIFT

(11) **EP 0 769 426 B1**
(45) Veröffentlichungstag und Bekanntmachung des Hinweises auf die Patenterteilung: **03.04.2002**
(21) Anmeldenummer: 96116578.4
(22) Anmeldetag: 15.10.1996
(51) Int. Cl.: B60R 21/20

(54) **Airbag-Gehäuse**
Housing for an air bag
Boîtier pour sac gonflable

(30) Priorität: 19.10.1995 DE 19538871
(43) Veröffentlichungstag der Anmeldung: 23.04.1997
(73) Patentinhaber: TRW Automotive Safety Systems GmbH & Co. KG, 63743 Aschaffenburg (DE)
(72) Erfinder: Bohn, Stefan, 63773 Goldbach (DE)
(74) Vertreter: Degwert, Hartmut, Dipl.-Phys.

(56) Entgegenhaltungen:
- EP-A- 0 602 796
- EP-A- 0 620 139
- EP-A- 0 663 325
- EP-A- 0 716 962
- US-A- 5 431 432
- US-A- 5 435 596
- PATENT ABSTRACTS OF JAPAN vol. 017, no. 623 (M-1511), 17. November 1993 (1993-11-17) & JP 05 193432 A (TOYODA GOSEI CO LTD), 3. August 1993 (1993-08-03)

## Beschreibung

Die Erfindung betrifft ein Gehäuse gemäß dem Oberbegriff von Anspruch 1. Ferner betrifft die Erfindung ein Gehäuse gemäß dem Oberbegriff von Anspruch 6. Des weiteren betrifft die Erfindung ein Gehäuse gemäß dem Oberbegriff von Anspruch 13. Die Erfindung betrifft auch ein Gehäuse gemäß dem Oberbegriff von Anspruch 15.

In zunehmendem Maße werden von den Automobilherstellern Airbags auch für den Beifahrer als Sonderausstattung angeboten oder gar serienmäßig vorgesehen. Dabei ist man bestrebt, solche Airbag-Module möglichst preiswert herzustellen, um dem Kunden die zusätzliche Sicherheit möglichst kostengünstig anbieten zu können. Dazu werden alle Elemente des Airbag-Moduls kritisch analysiert und auf Einsparmöglichkeiten untersucht. Bei einem Gehäuse können Einsparungen insbesondere dadurch realisiert werden, daß man diese nicht mehr an die vorgegebenen u.U. engen und verwinkelten Einbauverhältnisse anpaßt, sondern umgekehrt die betroffenen Bereiche der Kraftfahrzeugkarosserie, insbesondere im Armaturenbrett, bereits serienmäßig für den Einbau eines Airbags ausgestaltet. Damit wird die Möglichkeit eröffnet, einheitliche Gehäuse für eine Vielzahl von Anwendungsfällen zu schaffen und die Fertigungsvorteile bei der Herstellung großer Stückzahlen zu nutzen.

Aus der EP-A-0 620 139 ist ein Gehäuse gemäß dem Oberbegriff der Ansprüche 1, 6, 13, 15 zur Aufnahme eines Gasgenerators und eines Luftsacks bekannt, das ein U-förmiges Basisteil aufweist. Das Basisteil ist in Längsrichtung beidseitig mit jeweils einem zylinderförmigen Hohlraum versehen, in dem jeweils eine Stange angeordnet ist, die zur Befestigung des Luftsacks dient. Gemäß einer weiteren Ausführungsform ist der Luftsack außerhalb des Basisteils in nach innen weisenden, halbkreisförmigen Einbuchtungen befestigt.

Aus der US-A-5 431 432 ist ein Gehäuse zur Aufnahme eines Gasgenerators und eines Luftsacks bekannt, bei dem Mittel vorgeseben sind, die zur Befestigung des Luftsacks und einer Abdeckung dienen.

Aus der US-A-5 435 596 ist ein Gehäuse zur Aufnahme eines Gasgenerators und eines Luftsacks mit einem Basisteil und einer Abdeckung bekannt. Das Basisteil und die Abdeckung werden über in Längsrichtung verlaufende Stege und dazu komplementäre Ausnehmungen sowie mittels eines bzw. mehrerer Bänder miteinander verbunden.

Der Erfindung liegt die Aufgabe zugrunde, ein Gehäuse der eingangs genannten Art vorzuschlagen, das unter Berücksichtigung der genannten Gesichtspunkte möglichst einfach und preiswert herstellbar sowie montierbar ist, ohne daß Funktionsnachteile in Kauf zu nehmen sind.

Zur Lösung dieser Aufgabe wird erfindungsgemäß ein Gehäuse gemäß dem Oberbegriff von Anspruch 1 vorgeschlagen, dessen Endteile über in Achsrichtung des Basisteils angeordnete Spannmittel mit dem Basisteil verbunden sind, bei dem Zugstangen bzw. Zuganker und Muttern umfassende Spaimmittel gleichzeitig zur Befestigung des Luftsacks und des Schutzüberzuges dienen, und bei dem in den nach innen weisenden, halbkreisförmigen Einbuchtungen angeordnete Zugstangen etwa bündig mit der Außenseite der Schenkel abschließen.

Bei solchen aus einem Halbzeugabschnitt bestehenden Basisteil sind die zugehörigen Endteile vorzugsweise aus der Querschnittsform des Basisteils angepaßten, flachen Blechteilen gefertigt, deren Randbereiche zum Übergreifen des Basisteils etwa rechtwinklig umgeformt sind. Bei einer vorteilhaften Ausführungsform weisen die Endteile in an sich bekannter Weise die für die Unterbringung des Generators erforderlichen Öffnungen und je vier randseitige Bohrungen für die Aufnahme von als Zugstangen ausgebildeten, endseitig mit Gewinde versehenen Spannmitteln auf. Zur Befestigung des Luftsacks und/oder des Schutzüberzugs am Gehäuse werden zweckmäßigerweise Materialabschnitte des Luftsacks bzw. des Scbutzübelzugs benutzt, die um die Zugstangen schlingbar und zwischen Zugstangen und Basisteil festklemmbar sind.

Zur Lösung der Aufgabe ist ferner ein Gehäuse gemäß dem Oberbegriff von Anspruch 6 vorgesehen, bei dem die Endteile über in Achsrichtung des Basisteils angeordnete Spanamittel mit dem Basisteil verbunden sind, bei dem die Spannmittel gleichzeitig zur Befestigung des Luftsacks und der Abdeckung dienen und bei dem die oberen Endkanten des Basisteils über eine größere Breite unter Bildung einer Materialdopplung nach außen umgefaltet sind. Die vertikalen Schenkel des Basisteils sind etwa auf halber Höhe stufenartig nach außen erweitert. Im Bereich der Materialdopplung sind sich in Längsrichtung erstreckende Durchbrechungen vorgesehen. Die Spannmittel bestehen aus zwei innenliegenden, sich über die gesamte Länge des Basisteils erstreckenden, im Querschnitt im wesentlichen T-förmigen Stegen, zwei außenliegenden, durch ebenfalls über die gesamte Länge des Basisteils sich erstreckenden und mit Durchbrechungen, entsprechend denen im Basisteil versehenen U-förmigen Stegen, und zwei durch die Endteile steckbaren Zugankern, wobei der Basisschenkel der T-förmigen Stege eine Längsöffnung für die Aufnahme der Zuganker aufweist und sich in Längsrichtung nur über die Bereiche erstreckt, in denen im Bereich der Materialdopplung im Basisteil Durchbrechungen vorgesehen sind.

Zur Lösung der Aufgabe ist ferner ein Gehäuse gemäß dem Oberbegriff von Anspruch 13 vorgesehen, bei dem die Endteile über in Achsrichtung des Basisteils angeordnete Spannmittel mit dem Basisteil verbunden sind, und bei dem die Spannmittel gleichzeitig zur Befestigung des Luftsacks und der Abdeckung dienen. Die vertikalen Schenkel weisen etwa auf halber Höhe eine stufenförmige Erweiterung auf und die Enden des U-förmigen Querschnitts bilden nach außen weisende geschlossene Ringräume, in deren Wandungen innenseitig sich in Längsrichtung erstreckende Durchbrechungen angeordnet sind. Die Spannmittel bestehen aus zwei innenliegenden T-förmigen Stegen und zwei Zugankern.

Zur Lösung der Aufgabe ist auch ein Gehäuse gemäß dem Oberbegriff von Anspruch 15 vorgesehen, bei dem die Endteile über in Achsrichtung des Basisteils angeordnete Spannmittel mit dem Basisteil verbunden sind, und bei dem die Spannmittel gleichzeitig zur Befestigung des Luftsacks und der Abdeckung dienen. Die vertikalen Schenkel des Basisteils weisen etwa auf halber Höhe nach außen rechtwinklige abstehende Stege auf. Die oberhalb dieser Stege liegenden Wandbereiche bilden geschlossene, längliche nach außen weisende Ringräume, in deren Wandungen außenseitig sich in Längsrichtung erstreckende Durchbrechungen angebracht sind. Die Spannmittel bestehen aus zwei außenliegenden T-förmigen Stegen und zwei Zugankern.

Bei beiden zuletzt genannten Ausführungen können Materialabschnitte des Luftsacks und der Abdeckung mittels der Zuganker zwischen dem T-förmigen Steg und dem oberen Bereich des Basisteil gemeinsam eingeklemmt werden.

Eine weitere vorteilhafte Abwandlung des Erfindungsgedankens besteht darin, daß der eingeklemmte Materialabschnitt der Abdeckung endseitig eine nach außen oder innen weisende Abkantung aufweist, mittels derer die Materialdopplung des Basisteils oder der T-förmige Steg formschlüssig hintergreifbar ist.

Ferner ist vorgesehen, daß die T-förmigen Stege aus einem stranggepreßten oder extrudierten Halbzeug bestehen können. Anstelle der zwei durchgehenden Zuganker kann man auch vier Schraubbolzen mit selbstschneidendem Gewinde vorsehen. Eine weitere Vereinfachung kann darin bestehen, daß die T-förmigen Stege einstückig mit einem der Endteile hergestellt werden. Schließlich ist es zweckmäßig, wenn die Endteile Mittel zum Befestigen des Moduls in einem Armaturenbrett bzw. in einer Fahrzeugkarosserie aufweisen.

Bei allen erfindungsgemäßen Gehäusen bestehen die Basisteile aus Abschnitten eines in großen Längen und daher preisgünstig herstellbaren Halbzeugs, dessen Querschnittsform in vielfältiger Weise den Anforderungen angepaßt werden kann. Zusammen mit den Endteilen und den jeweils sich in Längsrichtung des Basisteils erstreckenden Spannmitteln ergeben sich aus wenigen Einzelteilen bestehende Gehäuse, die mit dem Luftsack, dem Gasgenerator und ggf. einem Schutzüberzug bzw. einer Abdeckung durch die Spannmittel ohne großen Montageaufwand zu einem Airbag-Modul zusammenfügbar sind. Als besonders vorteilhaft wird angesehen, daß die Spannmittel auf vier Zuganker bzw. zwei Zuganker oder vier Schraubbolzen reduziert werden konnten und daß für die Befestigung des Luftsacks, des Schutzüberzuges und der Abdeckung keine weiteren Befestigungsmittel erforderlich sind. Soweit zur Befestigung des Airbag-Moduls an der Kraftfahrzeugkarosserie noch Montagebleche vorgesehen werden müssen, können diese ebenfalls mit den Spannmitteln am Airbag-Modul befestigt werden.

Weitere Einzelheiten werden anhand der in den Figuren 1 - 5 dargestellten Ausführungsbeispiele näher erläutert. Es zeigen:
Fig. 1 eine erste Ausführungsform im Schnitt
Fig. 2 die erste Ausführungsform in der Seitenansicht
Fig. 3 eine zweite Ausführungsform im Schnitt
Fig. 4 eine dritte Ausführungsform im Schnitt
Fig. 5 eine vierte Ausführungsform im Schnitt

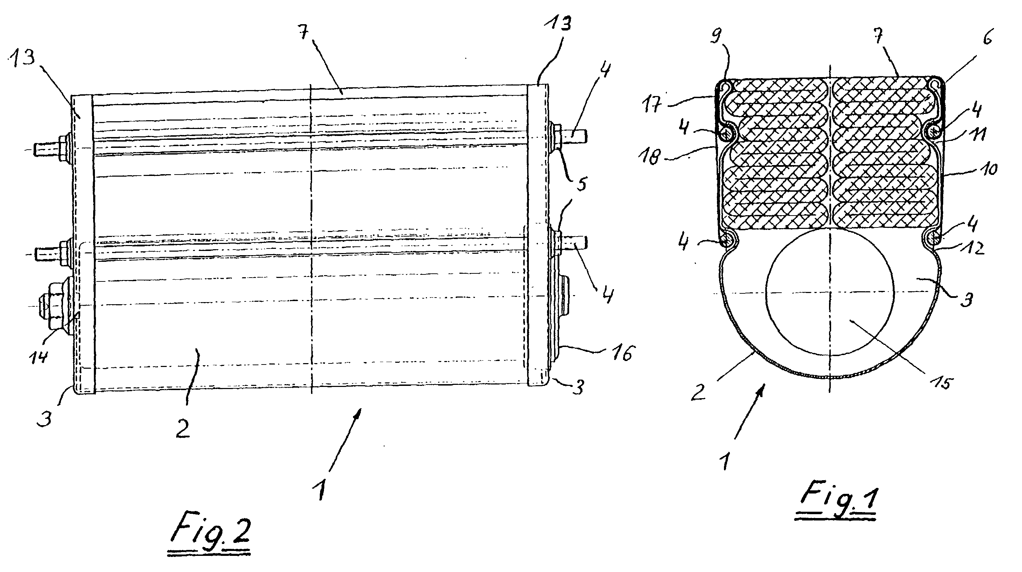

Fig. 1 zeigt ein Gehäuse (1) für ein Airbag-Modul, bei dem das Basisteil (2) aus einem durch Schnitte senkrecht zur Längsachse von einem Blechhalbzeug abgetrennten Abschnitt besteht. Die Querschnittsform ist im wesentlichen U-förmig mit halbkreisförmigem Bodenbereich und an den oberen Endkanten (9) nach außen umgebördelten Schenkeln (10). Außerdem sind in den Schenkeln (10) noch zwei Einbuchtungen (11, 12) vorgesehen, die etwa halbkreisförmig ausgebildet sind und bei montiertem Airbag-Modul zur Aufnahme der aus Zugstangen (4) bestehenden Spannmittel dienen. Das Endteil (3) weist eine Öffnung (15) für die Unterbringung eines Gasgenerators auf. Oberhalb dieser Öffnung ist der Luftsack (6) eingefaltet und mit einem Schutzüberzug (7) versehen. Sowohl der Luftsack, wie auch der Schutzüberzug sind mit Materialabschnitten (17, 18) versehen, die um die Zugstangen (4) schlingbar sind.

Aus der Seitenansicht des Gehäuses (1) gem. Fig. 2 ist ersichtlich, wie die Endteile (3) mit ihren etwa rechtwinklig abgewinkelten Randbereichen (13) das Basisteil (2) übergreifen. Im linken Endteil (3) ist eine Öffnung (14) vorgesehen, die der Befestigung des Gasgenerators (16) dient. Die Spannmittel bestehen in diesem Fall aus den Zugankern (4), die endseitig mit Gewinde versehen sind und den Muttern (5), die auf die Zuganker (4) aufgeschraubt sind.

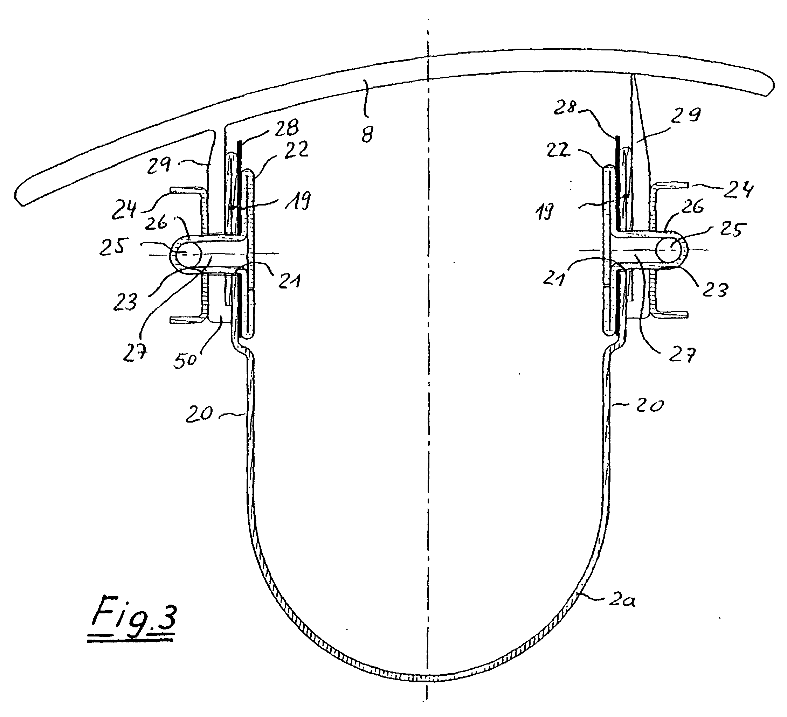

Bei der Ausführungsform gem. Fig. 3 besteht das Basisteil (2a) wiederum aus einem Abschnitt eines Blech-Halbzeugs mit im wesentlichen U-förmigen Querschnitt, dessen obere Endkanten über eine größere Breite unter Bildung einer Materialdopplung (19) nach außen umgefaltet sind. Die vertikalen Schenkel (20) sind etwa auf halber Höhe stufenartig nach außen erweitert und im Bereich der Materialdopplung sind sich in Längsrichtung erstreckende Durchbrechungen (21) vorgesehen. In diesem Fall bestehen die Spannmittel aus zwei innenliegenden, sich über die gesamte Länge des Basisteils (2a) erstreckenden, im Querschnitt im wesentlichen T-förmigen Stegen (22), zwei außenliegenden, sich ebenfalls über die gesamte Länge des Basisteils erstreckenden und mit Durchbrechungen (23) entsprechend denen im Basisteil (2a) versehenen U-förmigen Stegen (24) und zwei durch die Endteile (3) steckbaren Zugankern (25). Der Basisschenkel (26) der T-förmigen Stege (22) weist eine Längsöffnung (27) für die Aufnahme der Zuganker auf und erstreckt sich in Längsrichtung nur über die Bereiche, in denen im Bereich der Materialdopplung (19) im Basisteil (2a) Durchbrechungen (21) vorgesehen sind. Materialabschnitte des Luftsacks (28) und/oder einer Abdeckung (8) sind mittels der Zuganker (25) zwischen dem innenliegenden T-förmigen Steg (22) und dem Basisteil (2a) bzw. zwischen dem außenliegenden U-förmigen Steg (24) und dem Basisteil (2a) über die gesamte Länge des Basisteils (2a) einklemmbar. Dabei kann die Materialelastizität der eingeklemmten Materialabschnitte (28, 29) sowie der Stege (22, 24) und der Zuganker (25) dazu ausgenutzt werden, eine über die gesamte Länge des Basisteils (2a) ausreichende Vorspannung im Klemmbereich zu erzeugen.

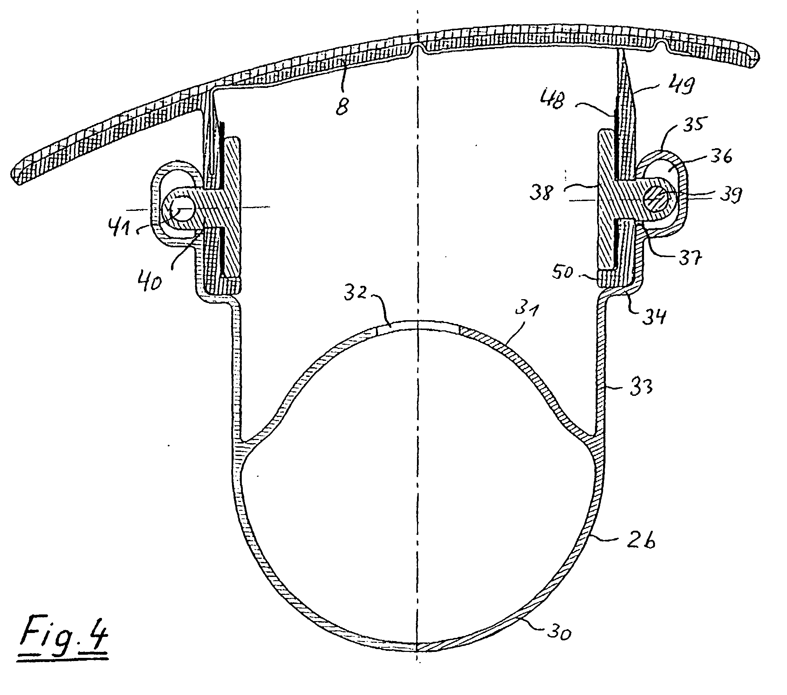

Bei der Ausführungsform gem. Fig. 4 besteht das Basisteil (2b) aus einem stranggepreßten oder extrudierten Halbzeug mit wiederum im wesentlichen U-förmigen Querschnitt mit halbkreisförmigem Bodenbereich (30). Außerdem ist eine etwa halbkreisförmig den Bodenbereich überdachende Zwischenwand (31) angeordnet und mit Durchbrechungen (32) versehen. Die vertikalen Schenkel (33) weisen etwa auf halber Höhe eine stufenförmige Erweiterung (34) auf und die Enden (35) des U-förmigen Querschnitts bilden nach außen weisende, geschlossene Ringräume (36). In letzteren sind innenseitig sich in Längsrichtung erstreckende Durchbrechungen (37) angebracht. Bei dieser Ausführungsform bestehen die Spannmittel aus zwei innenliegenden T-förmigen Stegen (38) und zwei Zugankern (39), wobei der Basisteil (40) des Steges (38) eine Längsbohrung (41) für die Aufnahme des Zugankers (39) aufweist und sich in Längsrichtung nur über die Bereiche erstreckt, in denen in der Wandung des Ringraumes (36) Durchbrechungen (37) vorgesehen sind. Materialabschnitte (48) des Luftsacks und Materialabschnitte (49) der Abdeckung (8) sind zwischen den T-förmigen Stegen (38) und der Wandung des Basisteils (2b) eingeklemmt, wobei die unteren Enden der Materialabschnitte (49) die Stege (38) mit einer Abkantung (50) formschlüssig hintergreifen.

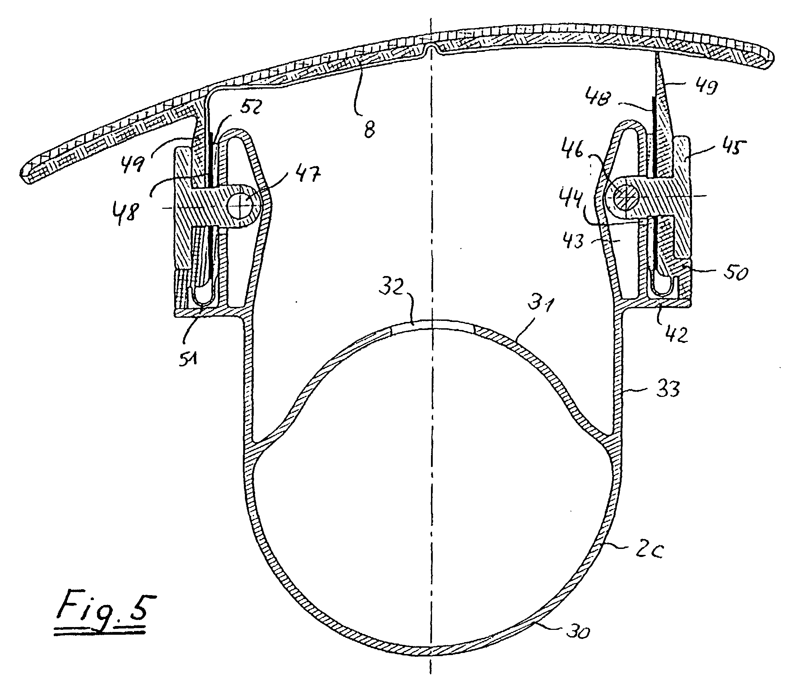

Die Ausführungsform gem. Fig. 5 besteht ebenfalls aus einem Abschnitt eines stranggepreßten oder extrudierten Halbzeugs, wobei der untere Bereich des Basisteils (2c) wie bei der Ausführungsform gem. Fig. 4. ausgestaltet ist. Die vertikalen Schenkel (33) weisen etwa auf halber Höhe nach außen rechtwinklig abstehende Stege (42) auf und die oberhalb dieser Stege (42) liegenden Wandbereiche bilden geschlossene, längliche Ringräume (43), in deren Wandungen außenseitig sich in Längsrichtung erstreckende Durchbrechungen (44) angebracht sind. Die Spannmittel bestehen aus zwei außenliegenden T-förmigen Stegen (45) und zwei Zugankern (46), wobei der Basisteil des Steges (45) eine Längsbohrung (47) für die Aufnahme des Zugankers (46) aufweist und sich in Längsrichtung nur über die Bereiche erstreckt, in denen in der Wandung des Ringraums (43) Durchbrechungen (44) vorgesehen sind. Materialabschnitte (48, 49) des Luftsacks und der Abdeckung (8) sind mittels der Zuganker zwischen dem T-förmigen Steg (45) und dem oberen Bereich des Basisteils (2c) gemeinsam eingeklemmt. Der eingeklemmte Materialabschnitt (49) der Abdeckung (8) weist endseitig eine nach außen weisende Abkantung (50) auf, mittels derer der T-förmige Steg (45) formschlüssig hintergreifbar ist. Der Materialabschnitt (49) der Abdeckung (8) kann auch zweiteilig ausgeführt werden, wobei der außen liegende Teil (49) und ein innen liegender Teil (52) über eine Materialschlaufe (51) einstückig ausgebildet sind und in montiertem Zustand den Materialabschnitt (48) des Luftsacks zwischen sich einklemmen. Auch in diesem Fall wird die Materialelastizität dazu ausgenutzt, eine über den gesamten Klemmbereich wirkende, ausreichende Vorspannung zu erzeugen.

## Patentansprüche

1. Gehäuse zur Aufnahme eines Gasgenerators und eines Luftsacks für eine Beifahrer-Schutzeinrichtung in einem Kraftfahrzeug, das zusammen mit dem Gasgenerator, dem Luftsack sowie ggf. mit einem Schutzüberzug, einer Abdeckung und Befestigungsmitteln ein einbaufertiges Modul bildet, wobei das Gehäuse (1) aus einem im wesentlichen U-förmigen Basisteil (2) und zwei hauptsächlich flachen Endteilen (3) zusammengesetzt ist, das Basisteil (2) in Längserstreckung einen gleichbleibenden Querschnitt aufweist und die vertikalen Schenkel (10) des Basisteils im Abstand von den oberen Endkanten je eine nach innen weisende, halbkreisförmige Einbuchtung (11, 12) aufweisen, **dadurch gekennzeichnet, daß** die Endteile (3) über in Achsrichtung des Basisteils (2) angeordnete Spannmittel (4, 5) mit dem Basisteil verbunden sind, daß die Zugstangen bzw. Zuganker (4) und Muttern (5) umfassenden Spannmittel gleichzeitig zur Befestigung des Luftsacks (6) und des Schutzüberzuges (7) dienen und daß in den nach innen weisenden, halbkreisförmigen Einbuchtungen (11, 12) angeordnete Zugstangen etwa bündig mit der Außenseite der Schenkel (10) abschließen.

2. Gehäuse nach Anspruch 1, **dadurch gekennzeichnet, daß** das Basisteil (2) einen U-förmigen Querschnitt mit halbkreisförmigem Bodenbereich aufweist, bei dem die oberen Endkanten (9) nach außen umgebördelt sind.

3. Gehäuse nach einem der vorhergehenden Ansprüche, **dadurch gekennzeichnet, daß** die zugehörigen Endteile aus der Querschnittsform des Basisteils angepaßten, flachen Blechteilen bestehen, deren Randbereiche (13) zum Übergreifen des Basisteils (2) etwa rechtwinklig umgeformt sind.

4. Gehäuse nach Anspruch 3, **dadurch gekennzeichnet, daß** die Endteile (3) in an sich bekannter Weise die für die Unterbringung des Gasgenerators (16) erforderlichen Öffnungen (14, 15) und je vier randseitige Bohrungen für die Aufnahme der endseitig mit Gewinde versehenen Zugstangen (4) aufweisen.

5. Gehäuse nach einem der vorhergehenden Ansprüche, **dadurch gekennzeichnet, daß** zur Befestigung des Luftsacks (6) und/oder des Schutzüberzugs (7) am Gehäuse Materialabschnitte (17, 18) des Luftsacks bzw. des Schutzüberzugs benutzt werden, die um die Zugstangen (4) schlingbar und zwischen Zugstangen (4) und Basisteil (2) festklemmbar sind.

6. Gehäuse zur Aufnahme eines Gasgenerators und eines Luftsacks für eine Beifahrer-Schutzeinrichtung in einem Kraftfahrzeug, das zusammen mit dem Gasgenerator, dem Luftsack sowie ggf. mit einem Schutzüberzug, einer Abdeckung und Befestigungsmitteln ein einbaufertiges Modul bildet, wobei das Gehäuse aus einem im wesentlichen U-förmigen Basisteil (2a) mit halbkreisförmigem Bodenbereich und zwei hauptsächlich flachen Endteilen zusammengesetzt ist, das Basisteil (2a) in Längserstreckung einen gleichbleibenden Querschnitt aufweist, **dadurch gekennzeichnet, daß** die Endteile (3) über in Achsrichtung des Basisteils (2a) angeordnete Spannmittel mit dem Basisteil verbunden sind, daß die Spannmittel gleichzeitig zur Befestigung des Luftsacks (6) und der Abdeckung dienen, daß die oberen Endkanten des Basisteils über eine größere Breite unter Bildung einer Materialdopplung (19) nach außen umgefaltet sind, daß die vertikalen Schenkel (20) des Basisteils etwa auf halber Höhe stufenartig nach außen erweitert sind, daß im Bereich der Materialdopplung (19) sich in Längsrichtung erstreckende Durchbrechungen (21) vorgesehen sind und daß die Spannmittel aus zwei innenliegenden, sich über die gesamte Länge des Basisteils (2a) erstreckenden, im Querschnitt bereichsweise T-förmigen Stegen (22), zwei außenliegenden, durch ebenfalls über die gesamte Länge des Basisteils sich erstreckenden und mit Durchbrechungen (23) entsprechend denen im Basisteil (2a) versehenen U-förmigen Stegen (24) und zwei durch die Endteile (3) steckbaren Zugankern (25) bestehen, wobei der Basisschenkel (26) der T- förmigen Stege (22) eine Längsöffnung (27) für die Aufnahme der Zuganker (25) aufweist und sich in Längsrichtung nur über die Bereiche erstreckt, in denen im Bereich der Materialdopplung (19) im Basisteil (2a) Durchbrechungen (21) vorgesehen sind.

7. Gehäuse nach Anspruch 6, **dadurch gekennzeichnet, daß** Materialabschnitte des Luftsacks (28) und/oder einer Abdeckung (8) mittels der Zuganker (25) zwischen dem innenliegenden T-förmigen Steg (24) und dem Basisteil (2a) bzw. zwischen dem außenliegenden U-förmigen Steg und dem Basisteil über die gesamte Länge des Basisteils (2a) einklemmbar sind.

8. Gehäuse nach Anspruch 7, **dadurch gekennzeichnet, daß** der innenliegende T-förmige Steg (22) aus einem abgekanteten Blech-Halbzeug besteht, bei dem der Basisschenkel (26) doppelwandig U-förmig ausgebildet ist und die Bereiche des Basisschenkels, die nicht mit den Durchbrechungen (21) im Basisteil (2a) korrespondieren, ausgeschnitten sind.

9. Gehäuse nach Anspruch 7, **dadurch gekennzeichnet, daß** auch der außenliegende U-förmige Steg (24) aus einem abgekanteten Blech-Halbzeug besteht, in dem die Durchbrechungen (23) ausgestanzt sind.

10. Gehäuse nach einem der Ansprüche 7 bis 9, **dadurch gekennzeichnet, daß** der eingeklemmte Materialabschnitt (29) der Abdeckung endseitig eine nach außen oder innen weisende Abkantung (50) aufweist, mittels derer die Materialdopplung (19) des Basisteils formschlüssig hintergreifbar ist.

11. Gehäuse nach einem der vorhergehenden Ansprüche, **dadurch gekennzeichnet, daß** das Basisteil (2, 2a) aus einem durch Schnitte senkrecht zur Längsachse von einem Halbzeug abgetrennten Abschnitt besteht.

12. Gehäuse nach Anspruch 11, **dadurch gekennzeichnet, daß** das Basisteil aus einem Blech-Halbzeug besteht.

13. Gehäuse zur Aufnahme eines Gasgenerators und eines Luftsacks für eine Beifahrer-Schutzeinrichtung in einem Kraftfahrzeug, das zusammen mit dem Gasgenerator, dem Luftsack sowie ggf. mit einem Schutzüberzug, einer Abdeckung und Befestigungsmitteln ein einbaufertiges Modul bildet, wobei das Gehäuse aus einem im wesentlichen U-förmigen Basisteil (2b) mit halbkreisförmigem Bodenbereich und zwei hauptsächlich flachen Endteilen zusammengesetzt ist, das Basisteil (2b) in Längserstreckung einen gleichbleibenden Querschnitt aufweist, und wobei eine den Bodenbereich etwa halbkreisförmig überdachende Zwischenwand (31) angeordnet ist und mit Durchbrechungen versehen ist, **dadurch gekennzeichnet, daß** die Endteile über in Achsrichtung des Basisteils (2b) angeordnete Spannmittel mit dem Basisteil verbunden sind, daß die Spannmittel gleichzeitig zur Befestigung des Luftsacks und der Abdeckung dienen, daß die vertikalen Schenkel (33) etwa auf halber Höhe eine stufenförmige Erweiterung aufweisen, daß die Enden (35) des U-förmigen Querschnitts nach außen weisende, geschlossene Ringräume (36) bilden, in deren Wandungen innenseitig sich in Längsrichtung erstreckende Durchbrechungen (37) angeordnet sind und daß die Spannmittel aus zwei innenliegenden T-förmigen Stegen (38) und zwei Zugankern (39) bestehen.

14. Gehäuse nach Anspruch 13, **dadurch gekennzeichnet, daß** der Basisteil (40) des Steges (38) eine Längsbohrung (41) für die Aufnahme des Zugankers (39) aufweist und sich in Längsrichtung nur über die Bereiche erstreckt, in denen in der Wandung des Ringraumes (36) Durchbrechungen (37) vorgesehen sind.

15. Gehäuse zur Aufnahme eines Gasgenerators und eines Luftsacks für eine Beifahrer-Schutzeinrichtung in einem Kraftfahrzeug, das zusammen mit dem Gasgenerator, dem Luftsack sowie ggf. mit einem Schutzüberzug, einer Abdeckung und Befestigungsmitteln ein einbaufertiges Modul bildet, wobei das Gehäuse aus einem im wesentlichen U-förmigen Basisteil (2c) und zwei hauptsächlich flachen Endteilen zusammengesetzt ist, das Basisteil (2c) in Längserstreckung einen gleichbleibenden Querschnitt aufweist, daß eine den Bodenbereich etwa halbkreisförmig überdachende Zwischenwand (31) angeordnet und mit Durchbrechungen (32) versehen ist, **dadurch gekennzeichnet, daß** die Endteile über in Achsrichtung des Basisteils (2c) angeordnete Spannmittel mit dem Basisteil verbunden sind, daß die Spannmittel gleichzeitig zur Befestigung des Luftsacks und der Abdeckung dienen, daß die vertikalen Schenkel (33) des Basisteils etwa auf halber Höhe nach außen rechtwinklig abstehende Stege (42) aufweisen, daß die oberhalb dieser Stege (42) liegenden Wandbereiche geschlossene, längliche und nach außen weisende Ringräume (43) bilden, in deren Wandungen außenseitig sich in Längsrichtung erstreckende Durchbrechungen (44) angebracht sind und daß die Spannmittel aus zwei außenliegenden T-förmigen Stegen (45) und zwei Zugankern (46) bestehen.

16. Gehäuse nach Anspruch 15, **dadurch gekennzeichnet, daß** der Basisteil des Steges (45) eine Längsbohrung (47) für die Aufnahme des Zugankers (46) aufweist und sich in Längsrichtung nur über die Bereiche erstreckt, in denen in der Wandung des Ringraums (43) Durchbrechungen (44) vorgesehen sind.

17. Gehäuse nach einem der Ansprüche 14 bis 16, **dadurch gekennzeichnet, daß** Materialabschnitte (48, 49) des Luftsacks und der Abdeckung (8) mittels der Zuganker (39, 46) zwischen dem T-förmigen Steg (38, 45) und dem oberen Bereich des Basisteils (2b, 2c) gemeinsam einklemmbar sind.

18. Gehäuse nach Anspruch 17, **dadurch gekennzeichnet, daß** der eingeklemmte Materialabschnitt (49) der Abdeckung (8) endseitig eine nach außen oder innen weisende Abkantung (50) aufweist, mittels derer der T-förmige Steg (38, 45) formschlüssig hintergreifbar ist.

19. Gehäuse nach einem der Ansprüche 13 bis 18, **dadurch gekennzeichnet, daß** die T-förmigen Stege (38, 45) aus einem stranggepreßten oder extrudierten Halbzeug bestehen.

20. Gehäuse nach Anspruch 19, **dadurch gekennzeichnet, daß** anstelle der zwei durchgehenden Zuganker (39, 46) vier Schraubbolzen mit selbstschneidendem Gewinde vorgesehen sind.

21. Gehäuse nach einem der Ansprüche 13 bis 18, **dadurch gekennzeichnet, daß** die T-förmigen Stege (38, 45) einstückig mit einem der Endteile (3) hergestellt sind.

22. Gehäuse nach einem der Ansprüche 13 bis 21, **dadurch gekennzeichnet, daß** das Basisteil aus einem durch Schnitte senkrecht zur Längsachse von einem Halbzeug abgetrennten Abschnitt besteht.

23. Gehäuse nach Anspruch 22, **dadurch gekennzeichnet, daß** das Basisteil aus einem stranggepreßten Halbzeug besteht.

24. Gehäuse nach Anspruch 22, **dadurch gekennzeichnet, daß** das Basisteil aus einem extrudierten Halbzeug besteht.

25. Gehäuse nach einem der Ansprüche 1 bis 24, **dadurch gekennzeichnet, daß** die Endteile (3) Mittel zum Befestigen des Moduls in einem Armaturenbrett bzw. in einer Fahrzeugkarosserie aufweisen.

## Claims

1. A housing to receive a gas generator and an airbag for a passenger protection device in a motor vehicle, which together with the gas generator, the airbag and, where required, a protective covering, a cover and fastening means forms a ready-to-install module, the housing (1) being composed of an essentially U-shaped base part (2) and two mainly flat end parts (3), the base part (2) having a uniform cross-section along its length and the vertical legs (10) of the base part each having an inwardly directed, semicircular indentation (11, 12) at a distance from the upper end edges, **characterized in that** the end parts (3) are connected to the base part by tension means (4, 5) disposed in the axial direction of the base part (2), that the tension means comprising tie rods or tension rods (4) and nuts (5) serve simultaneously for fastening the airbag (6) and the protective covering (7), and that tie rods disposed in the inwardly directed, semicircular indentations (11, 12) terminate approximately flush with the outer side of the legs (10).

2. The housing according to claim 1, **characterized in that** the base part (2) has a U-shaped cross-section with a semicircular bottom region, in which the upper end edges (9) are crimped outwards.

3. The housing according to either of the preceding claims, **characterized in that** the associated end parts consist of flat sheet metal parts adapted to the cross-sectional shape of the base part, the flat sheet metal parts having edge regions (13) which are bent over at approximately right angles to overlap the base part (2).

4. The housing according to claim 3, **characterized in that** the end parts (3) have, in a manner known per se, the openings (14, 15) required for accommodating the gas generator (16), and each have four bore holes at the margins for receiving the tie rods (4) provided with threads at the ends.

5. The housing according to any of the preceding claims, **characterized in that** for fastening the airbag (6) and/or the protective covering (7) to the housing, material sections (17, 18) of the airbag and protective covering are used which can be looped around the tie rods (4) and can be clamped in place between the tie rods (4) and the base part (2).

6. A housing to receive a gas generator and an airbag for a passenger protection device in a motor vehicle, which together with the gas generator, the airbag and, where required, a protective covering, a cover and fastening means forms a ready-to-install module, the housing being composed of an essentially U-shaped base part (2a) having a semicircular bottom region and of two mainly flat end parts, the base part (2a) having a uniform cross-section along its length, **characterized in that** the end parts (3) are connected to the base part by tension means disposed in the axial direction of the base part (2a), that the tension means serve simultaneously for fastening the airbag (6) and the cover, that the upper end edges of the base part are folded outwards over a greater width to form a doubling of material (19), that the vertical legs (20) of the base part are widened outwards stepwise at approximately half their height, that openings (21) extending in the longitudinal direction are provided in the area of the doubled material (19), and that the tensioning means consist of two internal webs (22) which are regionally T-shaped in cross-section and extend over the entire length of the base part (2a), two external U-shaped webs (24) which likewise extend over the entire length of the base part and are provided with openings (23) corresponding to those in the base part (2a), and two tension rods (25) adapted to be passed through the end parts (3), the base stem (26) of the T-shaped webs (22) having a longitudinal opening (27) for receiving the tension rods (25) and extending in the longitudinal direction over only those areas in which openings (21) are provided in the base part (2a) in the area of the doubled material (19).

7. The housing according to claim 6, **characterized in that** material sections of the airbag (28) and/or of a cover (8) can be clamped in place between the internal T-shaped web (22) and the base part (2a) and/or between the external U-shaped web and the base part over the entire length of the base part (2a) by means of the tension rods (25).

8. The housing according to claim 7, **characterized in that** the internal T-shaped web (22) is made of a folded sheet metal stock material, in which the base stem (26) is designed in the shape of a U with a double wall and the areas of the base stem which do not correspond to the openings (21) in the base part (2a) are cut out.

9. The housing according to claim 7, **characterized in that** the external U-shaped web (24) is also made of a folded sheet metal stock material, in which the openings (23) are punched out.

10. The housing according to any of claims 7 to 9, **characterized in that** the clamped-in material section (29) of the cover has at the end a bent portion (50) pointing outwards or inwards, which is adapted to engage behind the doubled material (19) of the base part with an interlocking fit.

11. The housing according to any of the preceding claims, **characterized in that** the base part (2, 2a) consists of a section severed from a stock material by cuts perpendicular to the longitudinal axis.

12. The housing according to claim 11, **characterized in that** the base part consists of a sheet metal stock material.

13. A housing to receive a gas generator and an airbag for a passenger protection device in a motor vehicle, which together with the gas generator, the airbag and, where required, a protective covering, a cover and fastening means forms a ready-to-install module, the housing being composed of an essentially U-shaped base part (2b) having a semicircular bottom region and of two mainly flat end parts, the base part (2b) having a uniform cross-section along its length, and an intermediate wall (31) being disposed which approximately semicircularly overarches the bottom region and is provided with openings, **characterized in that** the end parts are connected to the base part by tension means disposed in the axial direction of the base part (2b), that the tension means serve simultaneously for fastening the airbag and the cover, that the vertical legs (33) have a step-like widened portion at about half their height, that the ends (35) of the U-shaped cross-section form closed annular chambers (36) directed outwards and having walls inside of which longitudinally extending openings (37) are disposed, and that the tension means consist of two internal T-shaped webs (38) and two tension rods (39).

14. The housing according to claim 13, **characterized in that** the stem part (40) of the web (38) has a longitudinal hole (41) for receiving the tension rod (39) and extends longitudinally over only those areas in which openings (37) are provided in the wall of the annular chamber (36).

15. A housing to receive a gas generator and an airbag for a passenger protection device in a motor vehicle, which together with the gas generator, the airbag and, where required, a protective covering, a cover and fastening means forms a ready-to-install module, the housing being composed of an essentially U-shaped base part (2c) and two mainly flat end parts, the base part (2c) having a uniform cross-section along its length, an intermediate wall (31) being disposed which approximately semicircularly overarches the bottom region and is provided with openings (32), **characterized in that** the end parts are connected to the base part by tension means disposed in the axial direction of the base part (2c), that the tension means serve simultaneously for fastening the airbag and the cover, that the vertical legs (33) of the base part have webs (42) at about half their height projecting outwards at right angles, that the wall areas lying above these webs (42) form closed, elongated annular chambers (43) directed outwards and having walls in which longitudinally extending openings (44) are provided on the outside, and that the tension means consist of two external T-shaped webs (45) and two tension rods (46).

16. The housing according to claim 15, **characterized in that** the stem part of the web (45) has a longitudinal hole (47) for receiving the tension rod (46) and extends longitudinally over only those areas in which openings (44) are provided in the wall of the annular chamber (43).

17. The housing according to any of claims 14 to 16, **characterized in that** material sections (48, 49) of the airbag and the cover (8) are adapted to be clamped in together between the T-shaped web (38, 45) and the upper area of the base part (2b, 2c) by means of the tension rods (39, 46).

18. The housing according to claim 17, **characterized in that** the clamped-in material section (49) of the cover (8) has at the end a bent portion (50) pointing outwards or inwards, which is adapted to engage behind the T-shaped web (38, 45) with an interlocking fit.

19. The housing according to any of claims 13 to 18, **characterized in that** the T-shaped webs (38, 45) consist of an extruded stock material.

20. The housing according to claim 19, **characterized in that** four bolts with self-cutting threads are provided instead of the two through-going tension rods (39, 46).

21. The housing according to any of claims 13 to 18, **characterized in that** the T-shaped webs (38, 45) are made integral with one of the end parts (3).

22. The housing according to any of claims 13 to 21, **characterized in that** the base part consists of a section severed from a stock material by cuts perpendicular to the longitudinal axis.

23. The housing according to claim 22, **characterized in that** the base part consists of an extruded stock material.

24. The housing according to claim 22, **characterized in that** the base part consists of an extruded stock material.

25. The housing according to any of claims 1 to 24, **characterized in that** the end parts (3) have means for fastening the module in an instrument panel or in a vehicle body.

## Revendications

1. Boîtier destiné à recevoir un générateur de gaz et un coussin à gaz pour un dispositif de protection de passager dans un véhicule automobile, qui avec le générateur de gaz, le coussin à gaz ainsi que, le cas échéant, un revêtement de protection, un couvercle et des moyens de fixation, forme un module prêt au montage, le boîtier (1) étant composé d'une pièce de base (2) sensiblement en forme de U et de deux pièces d'extrémité (3) principalement plates, la pièce de base (2) présentant en extension longitudinale une section transversale constante et les branches (10) verticales de la pièce de base présentant à distance des arêtes d'extrémité supérieures un creux respectif (11, 12) en forme de demi-cercle, tourné vers l'intérieur, **caractérisé en ce que** les pièces d'extrémité (3) sont reliées à la pièce de base par des moyens de serrage (4, 5) agencés en direction axiale de la pièce de base (2), **en ce que** les moyens de serrage comprenant des barres de traction ou tirants d'ancrage (4) et des écrous (5), servent simultanément à la fixation du coussin à gaz (6) et du revêtement de protection (7) et **en ce que** des barres de traction agencées dans les creux (11, 12) en forme de demi-cercles, tournés vers l'intérieur, se terminent approximativement en affleurement avec la face extérieure des branches (10).

2. Boîtier selon la revendication 1, **caractérisé en ce que** la pièce de base (2) présente une section transversale en forme de U avec une région de fond en demi-cercle, dans laquelle les arêtes d'extrémité (9) supérieures sont repliées vers l'extérieur.

3. Boîtier selon l'une quelconque des revendications précédentes, **caractérisé en ce que** les pièces d'extrémité associées sont constituées par des pièces de tôle plates adaptées à la forme de la section transversale de la pièce de base (2), dont les régions de bord (13) sont façonnées approximativement en angle droit pour chevaucher la pièce de base (2).

4. Boîtier selon la revendication 3, **caractérisé en ce que** les pièces d'extrémité (3) présentent, de manière connue, les ouvertures (14, 15) nécessaires pour le logement du générateur de gaz (16) et présentent chacune quatre perçages de bord pour recevoir les barres de traction (4) pourvues de filetages à leur extrémité.

5. Boîtier selon l'une quelconque des revendications précédentes, **caractérisé en ce que** pour fixer le coussin à gaz (6) et/ou le revêtement de protection (7) sur le boîtier, on utilise des portions de matériau (17, 18) du coussin à gaz et du revêtement de protection qui peuvent être enroulées autour des barres de traction (4) et serrées entre les barres de traction (4) et la pièce de base (2).

6. Boîtier destiné à recevoir un générateur de gaz et un coussin à gaz pour un dispositif de protection de passager dans un véhicule automobile, qui avec le générateur de gaz, le coussin à gaz ainsi que, le cas échéant, un revêtement de protection, un couvercle et des moyens de fixation, forme un module prêt au montage, le boîtier étant composé d'une pièce de base (2a) sensiblement en forme de U, avec région de fond en forme de demi-cercle, et de deux pièces d'extrémité principalement plates, la pièce de base (2a) présentant en extension longitudinale une section transversale constante, **caractérisé en ce que** les pièces d'extrémité (3) sont reliées à la pièce de base par des moyens de serrage agencés en direction axiale de la pièce de base (2a), **en ce que** les moyens de serrage servent simultanément à la fixation du coussin à gaz (6) et du couvercle, **en ce que** les arêtes d'extrémité supérieures de la pièce de base sont repliés vers l'extérieur sur une largeur importante en formant un redoublement de matériau (19), **en ce que** les branches (20) verticales de la pièce de base sont élargies en gradins vers l'extérieur, approximativement à mi-hauteur, **en ce que** dans la zone du redoublement de matériau (19) sont prévus des orifices (21) s'étendant en direction longitudinale et **en ce que** les moyens de serrage sont constitués par deux âmes internes (22) à section transversale en forme de T sur une certaine région, s'étendant sur toute la longueur de la pièce de base (2a), deux âmes externes (24) en forme de U s'étendant également sur toute la longueur de la pièce de base et pourvues d'orifices (23) correspondant à ceux de la pièce de base (2a), et deux tirants de traction (25) enfichables à travers les pièces d'extrémité (3), la branche de base (26) des âmes (22) en forme de T présentant une ouverture longitudinale (27) pour recevoir les tirants d'ancrage (25) et s'étendant en direction longitudinale seulement sur les régions dans lesquelles les orifices (21) sont prévus dans la zone de redoublement de matériau (19) dans la pièce de base (2a).

7. Boîtier selon la revendication 6, **caractérisé en ce que** des portions de matériau du coussin à gaz (28) et/ou d'un couvercle (8) peuvent être pincées sur toute la longueur de la pièce de base au moyen des tirants de traction (25), entre l'âme interne (22) en forme de T et la pièce de base (2a) et entre l'âme externe en forme de U et la pièce de base, respectivement.

8. Boîtier selon la revendication 7, **caractérisé en ce que** l'âme interne (22) en forme de T est constituée par un demi-produit en tôle repliée dans lequel la branche de base (26) est réalisée en double paroi en forme de U et les zones de la branche de base, qui ne correspondent pas aux orifices (21) dans la pièce de base (2a), sont découpées.

9. Boîtier selon la revendication 7, **caractérisé en ce que** l'âme externe (24) en forme de U est également constituée par un demi-produit en tôle repliée dans lequel les orifices (23) sont poinçonnés.

10. Boîtier selon l'une quelconque des revendications 7 à 9, **caractérisé en ce que** la portion de matériau (29) pincée du couvercle présente, à son extrémité, un chanfrein (50) orienté vers l'extérieur ou vers l'intérieur, au moyen duquel le redoublement de matériau (19) de la pièce de base peut être engagé par l'arrière par coopération de formes.

11. Boîtier selon l'une quelconque des revendications précédentes, **caractérisé en ce que** la pièce de base (2, 2a) est constituée par une portion séparée d'un demi-produit par des coupes perpendiculaires à l'axe longitudinal.

12. Boîtier selon la revendication 11, **caractérisé en ce que** la pièce de base est constituée par un demi-produit en tôle.

13. Boîtier destiné à recevoir un générateur de gaz et un coussin à gaz pour un dispositif de protection de passager dans un véhicule automobile, qui avec le générateur de gaz, le coussin à gaz ainsi que, le cas échéant, un revêtement de protection, un couvercle et des moyens de fixation, forme un module prêt au montage, le boîtier étant composé d'une pièce de base (2b) sensiblement en forme de U avec région de fond en forme de demi-cercle, et de deux pièces d'extrémité principalement plates, la pièce de base (2b) présentant en extension longitudinale une section transversale constante, et une paroi intermédiaire (31) recouvrant la région de fond approximativement en forme de demi-cercle étant agencée et pourvue d'orifices, **caractérisé en ce que** les pièces d'extrémité sont reliées à la pièce de base par des moyens de serrage agencés en direction axiale de la pièce de base (2b), **en ce que** les moyens de serrage servent simultanément à la fixation du coussin à gaz et du couvercle, **en ce que** les branches (33) verticales présentent approximativement à mi-hauteur un élargissement en gradins, **en ce que** les extrémités (35) de la section transversale en forme de U forment des espaces annulaires (36) fermés orientés vers l'extérieur, dans les parois desquels des orifices (37) s'étendant en direction longitudinale sont agencés sur la face intérieure, et **en ce que** les moyens de serrage sont constitués par deux âmes internes (38) en forme de T et par deux tirants d'ancrage (39).

14. Boîtier selon la revendication 13, **caractérisé en ce que** la pièce de base (40) de l'âme (38) présente un perçage longitudinal (41) pour recevoir le tirant d'ancrage (39) et s'étend en direction longitudinale seulement sur les régions dans lesquelles des orifices (37) sont prévus dans la paroi de l'espace annulaire (36).

15. Boîtier destiné à recevoir un générateur de gaz et un coussin à gaz pour un dispositif de protection de passager dans un véhicule automobile, qui avec le générateur de gaz, le coussin à gaz ainsi que, le cas échéant, un revêtement de protection, un couvercle et des moyens de fixation, forme un module prêt au montage, le boîtier étant composé d'une pièce de base (2c) sensiblement en forme de U et de deux pièces d'extrémité principalement plates, la pièce de base (2c) présentant en extension longitudinale une section constante, une paroi intermédiaire (31) recouvrant la région de fond approximativement en forme de demi-cercle étant agencée et pourvue d'orifices (32), **caractérisé en ce que** les pièces d'extrémité sont reliées à la pièce de base par des moyens de serrage agencés en direction axiale de la pièce de base (2c), **en ce que** les moyens de serrage servent simultanément à la fixation du coussin à gaz et du couvercle, **en ce que** les branches (33) verticales de la pièce de base présentent approximativement à mi-hauteur des âmes (42) faisant saillie à angle droit vers l'extérieur, **en ce que** les zones de paroi situées au-dessus de ces âmes (42) forment des espaces annulaires (43) fermés, allongés et orientés vers l'extérieur, dans les parois desquels des orifices (44) s'étendant en direction longitudinale sont ménagés sur la face extérieure, et **en ce que** les moyens de serrage sont constitués par deux âmes externes (45) en forme de T et deux tirants d'ancrage (46).

16. Boîtier selon la revendication 15, **caractérisé en ce que** la pièce de base de l'âme (45) présente un perçage longitudinal (47) pour recevoir le tirant d'ancrage (46) et s'étend en direction longitudinale seulement sur les régions dans lesquelles des orifices (44) sont prévus dans la paroi de l'espace annulaire (43).

17. Boîtier selon l'une quelconque des revendications 14 à 16, **caractérisé en ce que** des portions de matériau (48, 49) du coussin à gaz et du couvercle (8) peuvent être ensemble pincées au moyen des tirants d'ancrage (39, 46) entre l'âme en forme de T (38, 45) et la région supérieure de la pièce de base (2b, 2c).

18. Boîtier selon la revendication 17, **caractérisé en ce que** la portion de matériau (49) pincée du couvercle présente à son extrémité un chanfrein (50) orienté vers l'extérieur ou vers l'intérieur, au moyen duquel l'âme en forme de T (38) peut être engagé depuis l'arrière par coopération de formes.

19. Boîtier selon l'une quelconque des revendications 13 à 18, **caractérisé en ce que** les âmes en forme de T (38, 45) sont constituées par un demi-produit extrudé.

20. Boîtier selon la revendication 19, **caractérisé en ce qu'**à la place des deux tirants d'ancrage (39, 46) traversants sont prévus quatre boulons filetés autotaraudeurs.

21. Boîtier selon l'une quelconque des revendications 13 à 18, **caractérisé en ce que** les âmes en forme de T (38, 45) sont réalisées d'une seule pièce avec une des pièces d'extrémité (3).

22. Boîtier selon l'une quelconque des revendications 13 à 21, **caractérisé en ce que** la pièce de base est constituée par une portion séparée d'un demi-produit par des coupes perpendiculaires à l'axe longitudinal.

23. Boîtier selon la revendication 22, **caractérisé en ce que** la pièce de base est constituée par un demi-produit extrudé.

24. Boîtier selon la revendication 22, **caractérisé en ce que** la pièce de base est constituée par un demi-produit extrudé.

25. Boîtier selon l'une quelconque des revendications 1 à 24, **caractérisé en ce que** les pièces d'extrémité (3) présentent des moyens pour la fixation du moteur dans un tableau de bord ou dans une carrosserie de véhicule.
